# EUROPEAN PATENT SPECIFICATION

(11) **EP 4 271 498 B1**
(45) Date of publication and mention of the grant of the patent: **18.12.2024**
(21) Application number: 21847708.1
(22) Date of filing: 28.12.2021
(51) Int. Cl.: B01D 25/12, B01D 25/19

(54) **FILTER PRESS LOCKING MEANS**
VERSCHLUSS FÜR PLATTENFILTERPRESSE
FERMETURE POUR FILTRE-PRESSE A PLAQUES

(30) Priority: 31.12.2020 CN 202011618687
(43) Date of publication of application: 08.11.2023
(73) Proprietor: Metso Finland Oy, 02230 Espoo (FI)
(72) Inventor: LI, Zhihong, Shanghai, Pudong New District 201201 (CN); ILLI, Mika, 01700 Vantaa (FI); YAN, Huan, Shanghai, Pudong New District 201209 (CN)
(74) Representative: AWA Sweden AB
(86) International application number: PCT/EP2021/087736
(87) International publication number: WO 2022/144361

(56) References cited:
- WO-A1-2020/178477
- GB-A- 2 073 040
- US-A- 4 179 377
- US-A- 4 246 117

## Description

### FIELD OF THE INVENTION

The present disclosure relates to a filter press. In particular, the present disclosure relates to a filter press comprising a stationary frame, in which a head member, a movable tail member, an actuator for opening and closing movement of the filter press, and a plurality of filter plates arranged between the head member and the movable tail member are arranged.

### BACKGROUND

Filter presses for separating solid components from liquid components of a slurry are known e.g. from WO2020/178476 or WO2019/077055. In such filter presses the filters may be horizontally arranged as disclosed in WO2020/178476 or may be vertically arranged as disclosed in WO2019/077055. Further, such filter presses may have a flexible filter membrane such as a continuous belt, as disclosed in WO2020/178476 or have flexible filter membranes arranged in in each filter frame as disclosed in WO2019/077055.

Common for both vertically arranged filter presses and horizontally arranged filter presses is that the filter press comprises a head member, a plurality of filter plates (arranged with a flexible filter membrane continuous belt or flexible filter membranes arranged in each filter plate), and a movable tail member, all arranged in a filter press frame. Such filter presses further has an actuator for opening and closing of the filter press, thus, to pull the filter plates apart or to push the filter plates together. Such actuators may comprise hydraulic cylinders acting upon the movable tail member, or an electric motor for mechanically transmitting the opening movement and closing movement of the movable tail member and thereby opening or closing the filter press.

Further, such filter presses have an arrangement for locking and pressing the filter plates tight together before pumping the slurry into the filter press for processing. Such locking and pressing arrangement may comprise for example two or four hydraulic cylinders, either arranged within or separate from the opening and closing actuator cylinders as disclosed above and may be arranged to push the movable tail member even further towards the head member.

### SUMMARY

An object of the disclosure is to provide an improved and simplified locking arrangement for a filter press.

According to a first aspect of the disclosure, this and other objects are achieved, in full or at least in part, by a filter press comprising a stationary frame, in which a head member, a movable tail member, an actuator for opening and closing movement of the filter press, and a plurality of filter plates arranged between the head member and the movable tail member are arranged. The filter press further comprises a locking arrangement for locking the movable tail member with respect to the stationary frame after the closing movement of the movable tail member and the filter plates towards the head member by said actuator, wherein the locking arrangement is arranged to interact with a supporting surface in the stationary frame and a corresponding supporting surface in the movable tail member. According to the disclosure, the locking arrangement comprises at least one locking member having a first wedge-like surface, which at least one locking member is arranged to be movable in a direction generally perpendicular to the opening and closing movement of the filter press, wherein the first wedge-like surface of the at least one locking member is arranged to interact with a corresponding opposite second wedge-like surface, and at least one locking actuator arranged to move the at least one locking member so that the first wedge-like surface interacts with the opposite second wedge-like surface to thereby press the filter plates against each other, and wherein said corresponding opposite second wedge-like surface is arranged in any one of the supporting surfaces of the stationary frame or the movable tail member, respectively, or wherein the locking arrangement further comprises at least one loading member comprising the opposite second wedge-like surface, which at least one loading member is arranged to be movable in a direction perpendicular to the opening and closing movement of the filter press, and wherein at least one loading actuator is arranged to move the at least one loading member so that the opposite second wedge-like surface of the at least one loading member interacts with the first wedge-like surface of the at least one locking member.

According to this first aspect an improved and simplified locking arrangement is provided, which while providing substantial locking forces will not consume any energy during slurry processing. Wedge-like, or tapered surfaces, constitute very effective machine elements which can provide substantial forces in directions perpendicular to the insertion direction, i.e. it provides great mechanical advantage. This applies in particular to wedges having a limited height vs its length. Further, the locking arrangement may provide sealing of the filter plates without using active hydraulic forces during the filtering process. Thus, while the actuator for opening and closing movement of the filter press pushes the movable tail member and the plurality of filter plates towards the head member upon closing, the locking arrangement will take over the responsibility of pressing the movable tail member and the plurality filter plates towards the head member, and the actuator for opening and closing of the filter press do no longer have exercise active hydraulic forces to keep movable tail member and the plurality of filter plates tight towards the head member.

Even further, the locking arrangement according to the disclosure provides an adjustable sealing upon wear of the filter plates. Thus, when the plurality of filter plates have become worn, the filter plates either have to be exchanged or have to be pressed even further together to ensure sealing between the movable head member, the plurality of filter plates, and the head member. With a locking arrangement according to the present disclosure, the at least one locking member may be moved by the at least one locking actuator even further in the direction perpendicular to the opening and closing movement of the filter press, and this further movement will, when the first wedge-like surface interacts with the opposite second wedge-like surface, urge the movable tail member and the plurality of filter plates even further against the head member, and the filter press will become sealed. Further, it is also possible to monitor and predict the ageing of the sealing by comparing the positioning of the at least one locking member.

According to one embodiment, the supporting surfaces are arranged in openings of the stationary frame and the movable tail member, respectively.

According to one embodiment, the at least one locking member and the at least one locking actuator are arranged in the stationary frame of the filter press.

According to another embodiment, the at least one locking member and the at least one locking actuator are arranged in the movable tail member.

According to one embodiment, the locking actuator and/or the loading actuator are hydraulic, pneumatic, or electrically driven.

According to one embodiment, the first wedge-like surfaces and the opposite second wedge-like surfaces have structural engaging surfaces to prevent relative lateral movement between the first wedge-like surface and the opposite second wedge-like surface.

According to one embodiment, the first wedge-like surfaces and the opposite second wedge-like surfaces have structural engaging surfaces in form of corresponding tongue and groove shapes.

According to one embodiment, the first wedge-like surfaces and the opposite second wedge-like surfaces have friction enhancing surfaces.

With such an arrangement, the locking arrangement will provide sealing of the filter plates without using active actuator forces during the filtering process. Should the actuators for the locking and/or loading members be hydraulic cylinders, such an arrangement will ensure that no leakage of hydraulic fluid may contaminate the slurry processing during the slurry processing.

According to one embodiment, the locking arrangement comprises at least one pair of locking members and loading members.

According to one embodiment, the locking arrangement comprises at least two pairs of locking members and loading members.

According to one embodiment, the locking arrangement comprises at least three pairs of locking members and loading members.

According to one embodiment, the filter press has vertically arranged filter plates, and according to another embodiment, the filter press has horizontally arranged filter plates.

According to one embodiment, the flexible filter membrane is arranged as a continuous web around the filter plates, and in one embodiment a flexible filter membrane is arranged in each filter plate.

According to one embodiment, the actuator for opening and closing movement of the filter press may be one or more hydraulic cylinders, or one or more mechanically actuators comprising an electric motor.

Other objectives, features and advantages of the present disclosure will appear from the following detailed disclosure, from the attached claims, as well as from the drawings. It is noted that the disclosure relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

As used herein, the term "comprising", and variations of that term are not intended to exclude other additives, components, integers, or steps.

As used herein, the term "a direction perpendicular to" is to be interpreted as substantially perpendicular. It is clear to the skilled person that minor deviations are possible and allowable within the scope of this term and it should not be interpreted as strictly mathematically perpendicular only.

### BRIEF DESCRIPTION OF THE DRAWINGS

The disclosure will be described in more detail with reference to the appended schematic drawings, which show an example of a presently preferred embodiment of the disclosure.
Figs. 1a-b are schematical side views of a filter press according to one embodiment of the disclosure with horizontally arranged filter plates shown in an open position and closed position, respectively.
Figs. 2a-b are schematical side views of a filter press according to one embodiment of the disclosure with vertically arranged filter plates shown in an open position and closed position, respectively.
Figs. 3a-c are detailed plan views of the filter press of Fig. 1a-b showing one embodiment of the locking arrangement of the disclosure in three different positions, open, locked and locked and sealed arrangement.
Figs. 4a-c are detailed plan views of another embodiment of the locking arrangement of the disclosure.
Figs. 5a-b are detailed views of parts the locking arrangement of two different embodiments of the disclosure.

### DETAILED DESCRIPTION

The present disclosure will now be described more fully hereinafter with reference to the accompanying drawings, in which currently preferred embodiments of the disclosure are shown. The present disclosure may, however, be embodied in many different forms and should not be construed as limited to the embodiments set forth herein; rather, these embodiments are provided for thoroughness and completeness, and to fully convey the scope of the disclosure to the skilled addressee. Like reference characters refer to like elements throughout.

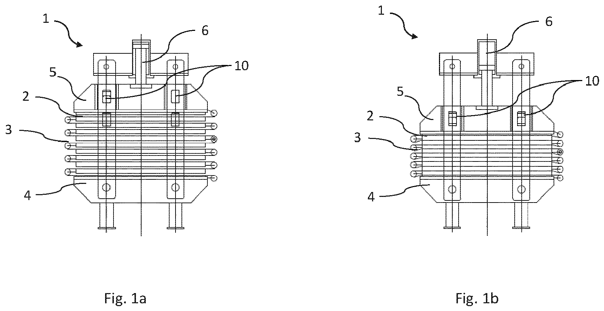

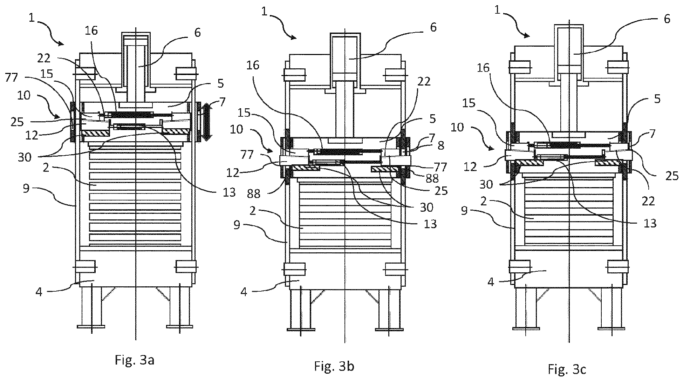

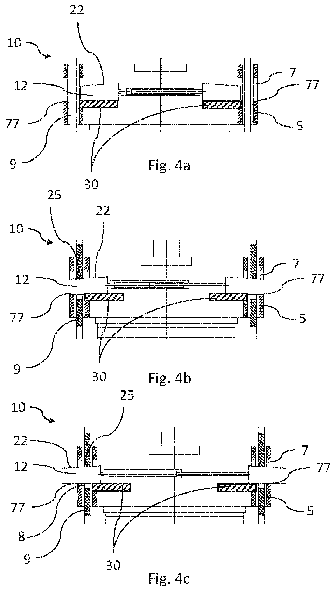

Figs. 1a-b show schematical side views of a filter press 1 according to one embodiment of the disclosure in an open and closed position, respectively. The filter plates 2 are arranged horizontally, and there-in-between a continuous web of flexible filter media 3 is arranged. The filter press has a head member 4 and a movable tail member 5, and an actuator 6 for opening and closing movement of the filter press 1. Also shown schematically is a locking arrangement 10, which will be disclosed in more detail in reference to Figs. 3a-c and Figs. 4a-b.

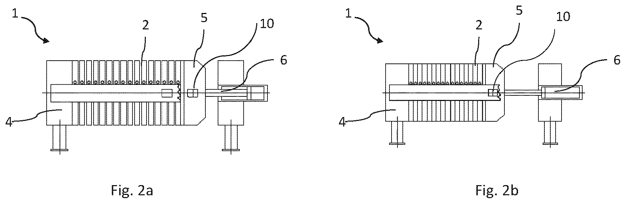

Figs. 2a-b show schematical side views of a filter press 1 according to one embodiment of the disclosure in an open and closed position, respectively. The filter plates 2 are arranged vertically, and each plate has flexible filter media arranged therein. The filter press has a head member 4 to the left and a movable tail member 5 to the right, and an actuator 6 for opening and closing movement of the filter press 1. Also shown schematically is a locking arrangement 10, which will be disclosed in more detail in reference to Figs. 3a-c and Fig. 4a-b.

Figs. 3a-c show one embodiment of the locking arrangement 10 according to the present disclosure, wherein Fig. 3a shows the locking arrangement 10 in an open position, Fig. 3b shows the locking arrangement 10 in a locked position and Fig. 3c shows the locking arrangement 10 in a locked and sealed position. The locking arrangement 10 comprises a locking member 12, a locking actuator 13, a loading member 15, and a loading actuator 16. In the open position, the locking member 12 and the loading member 15 are withdrawn within the movable tail member 5, and the movable tail head 5 is free to move in order to open or to close the filter press as shown with the double-directed arrow on the right side of the movable tail member 5 in Fig. 3a. Within the movable tail member 5, a supporting structure 30 may be arranged to be aligned with the supporting surface 77 of the opening 7 in the movable tail member 5 to support the locking member 12 and the loading member 15. When the movable tail member 5 has moved to a closed position (Fig. 3b), the locking member 12 is moved by the locking actuator 13 in a direction perpendicular to the opening and closing movement of the filter press in a linear movement, out through openings 8 arranged in a stationary filter press frame 9 and opening 7 arranged in the movable tail member 5. Thereafter, the loading actuator 16 moves the loading member 15, also in a direction perpendicular to the opening and closing movement of the filter press in a linear movement, through the opening 8 in the stationary frame and optionally also through the opening 7 in the movable tail member 5. It is to be noted that it is not necessary to align the openings 7, 8 in a coaxial manner. It is sufficient that the openings 7, 8 have enough overlap to allow the locking member 12 and the loading member 15 to be moved by the locking actuator 13 and the loading actuator 16 out through openings 7, 8. When the first wedge-like surface 22, and the opposite second wedge-like surface 25 interact, the openings 7, 8 will move relative to each other.

The locking member 12 has a first wedge-like surface 22, and the load member 15 has an opposite second wedge-like surface 25. When the loading member 15 is moved out through the openings 8 in the stationary frame 9 and the openings 7 in the movable tail member 5, the opposite second wedge-like surface 25 will interact with the first wedge-like surface 22 of the locking member 12. Further, the locking member 12 and the loading member 15 will interact with the supporting surfaces the openings 8 in the stationary frame 9 and the supporting surfaces in the openings 7 in the movable tail member 5, and the movable tail member 5 will be urged towards the head member 4, and the filter plates 2 there-in-between will become pressed and sealed towards each other.

Figs. 4a-c show another embodiment of the locking arrangement 10 according to the present disclosure, wherein Fig. 4a show the locking arrangement 10 in an open position, Fig. 4b show the locking arrangement 10 in a locked position and Fig. 4c show the locking arrangement 10 in a locked and sealed position.

In this embodiment the locking arrangement 10 only comprises a locking member 12 having a first wedge-like surface 22, whereas the opposite second wedge-like surface 25 is arranged in a supporting surface in the opening 8 in the stationary frame 9 (as shown in Figs. 4b-c). Thus, in this embodiment the locking member 12 both locks the movable tail member 5 to the stationary frame 9, and as the locking member 12 is continued to be moved out further through the openings 8 in the stationary frame 9 and the opening 7 in the movable tail member 5, the first wedge-like surface 22 will interact with the opposite second wedge-like surface 25 and will urge the movable tail member 5 closer to the head member 4, and the filter plates 2 (not shown in Fig. 4a-c) there-in-between are pressed and sealed towards each other. Also here, a supporting structure 30 may be arranged within the movable tail member 5 aligned with the supporting surface 77 of the opening 7 in the movable tail member 5 to support the locking member 12.

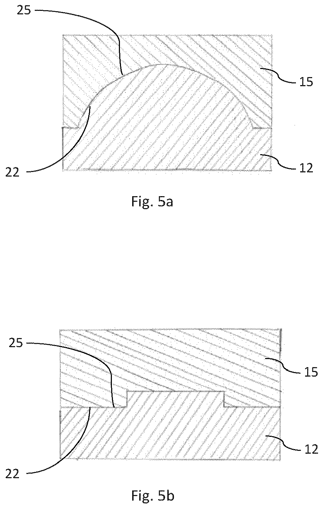

Figs. 5a-b show cross section views of first wedge-like surface 22 and the opposite second wedge-like surface 25 of the locking member 12 and loading member 15, and examples of structural engaging surfaces thereon to prevent relative lateral movement between the first wedge-like surface 22 and the opposite second wedge-like surface 25, such opposite second wedge-like surface 25 may also, as disclosed above in relation to the embodiment shown in Figs. 4a-c, be arranged in a supporting surface of the opening 8 in the stationary frame 9 of the filter press. Fig. 5a shows an arrangement with corresponding arced and beveled surfaces along the wedge-like surfaces 22, 25, and Fig. 5b shows an arrangement with corresponding tongue and groove surfaces along the wedge-like surfaces 22, 25.

The skilled person realises that a number of modifications of the embodiments described herein are possible without departing from the scope of the disclosure, which is defined in the appended claims.

For instance, the at least one locking member and the at least one locking actuator may be arranged in the stationary frame and be arranged to be moved into an opening of the movable tail member, and thereafter into an opening of the stationary frame of the filter press.

Further, the opposite second wedge-like surface may be arranged on a supporting surface on the movable tail member instead of on a supporting surface on the stationary filter press frame (as earlier disclosed in relation to Fig. 4a-c), and the locking member may have the first wedge-like surface arranged on the opposite side to what is shown in Fig. 4a-c to engage the opposite second wedge-like surface arranged on a supporting surface on the movable tail member.

Even further, the head member may be stationary or may be movable similar to the movable tail member. Thus, the filter press may have two movable end members, a movable head member and a movable tail member, arranged in a stationary filter press frame, wherein the two movable end members have two actuator arranged for openign and closing the filter press, one actuator at each movable end member. With such an arrangement, the the opening and closing stroke for each end member is half the stroke in comparison to the opening and closing stroke for a filter press having one stationary head member and one movable tail member. When the filter press according to the disclosure have two movable end members (head and tail), a locking arrangement according to the disclosure may be arranged in both movable end members, or a locking arrangement according to the disclosure is only used in one movable end member, while the other movable end member is arranged with a simple locking device, such as at least one locking pin to lock the movable end member in position relative to the stationary filter press frame.

## Claims

1. A filter press (1) comprising a stationary frame (9), in which a head member (4), a movable tail member (5), an actuator (6) for opening and closing movement of the filter press, and a plurality of filter plates (2) arranged between the head member and the movable tail member are arranged, wherein the filter press further comprises a locking arrangement (10) for locking the movable tail member (5) with respect to the stationary frame (9) after the closing movement of the movable tail member (5) and the filter plates (2) towards the head member (4) by said actuator (6) wherein the locking arrangement (10) is arranged to interact with a supporting surface (88) in the stationary frame (9) and a corresponding supporting surface (77) in the movable tail member (5), **characterized in that** the locking arrangement comprises
at least one locking member (12) having a first wedge-like surface (22), said at least one locking member is arranged to be movable in a direction perpendicular to the opening and closing movement of the filter press, wherein the first wedge-like surface (22) of the at least one locking member is arranged to interact with a corresponding opposite second wedge-like surface (25), and
at least one locking actuator (13) arranged to move the at least one locking member so that the first wedge-like surface (22) interacts with the opposite second wedge-like surface (25) to thereby press the filter plates against each other, and
wherein said corresponding opposite second wedge-like surface (25) is arranged in any one of the supporting surfaces (77, 88) of the stationary frame (9) or the movable tail member (5), respectively, or
wherein the locking arrangement further comprises at least one loading member (15) comprising the opposite second wedge-like surface (25), which at least one loading member is arranged to be movable in a direction perpendicular to the opening and closing movement of the filter press, and wherein at least one loading actuator (16) is arranged to move the at least one loading member so that the opposite second wedge-like surface (25) of the at least one loading member interacts with the first wedge-like surface (22) of the at least one locking member (12).

2. A filter press (1) according to claim 1, wherein the supporting surfaces (77, 88) are arranged in openings (7, 8) of the stationary frame (9) and the movable tail member (5), respectively.

3. A filter press (1) according to any one of claims 1-2, wherein the at least one locking member (12) and the at least one locking actuator (13) are arranged in the stationary frame (9) of the filter press.

4. A filter press (1) according to any one of claims 1-2, wherein the at least one locking member (12) and the at least one locking actuator (13) are arranged in the movable tail member (5).

5. A filter press (1) according to any one of claims 1-4, wherein the first wedge-like surfaces (22) and the opposite second wedge-like surfaces (25) have structural engaging surfaces to prevent relative lateral movement between the first wedge-like surfaces (22) and the opposite second wedge-like surfaces (25).

6. A filter press (1) according to claim 5, wherein the first wedge-like surfaces (22) and the opposite second wedge-like surfaces (25) have structural engaging surfaces in the form of corresponding tongue and groove shapes.

7. A filter press (1) according to any one of claims 1-6 wherein the first wedge-like surfaces (22) and the opposite second wedge-like surfaces (25) have friction enhancing surfaces.

8. A filter press (1) according to any one of claims 5-7, wherein the locking arrangement (10) comprises at least one pair of locking members (12) and loading members (15).

9. A filter press (1) according to any one of claims 5-7, wherein the locking arrangement comprises at least two pairs of locking members and loading members.

10. A filter press (1) according to any one of claims 5-7, wherein the locking arrangement comprises at least three pairs of locking members and loading members.

## Patentansprüche

1. Filterpresse (1), aufweisend einen stationären Rahmen (9), in dem ein Kopfelement (4), ein bewegliches Endelement (5), ein Aktuator (6) für eine Öffnungs- und Schließbewegung der Filterpresse und mehrere Filterplatten (2), die zwischen dem Kopfelement und dem beweglichen Endelement eingerichtet sind, angeordnet sind, wobei die Filterpresse ferner eine Sperranordnung (10) zum Sperren des beweglichen Endelements (5) in Bezug auf den stationären Rahmen (9) nach der Schließbewegung des beweglichen Endelements (5) und der Filterplatten (2) zu dem Kopfelement (4) durch den Aktuator (6) aufweist, wobei die Sperranordnung (10) so angeordnet ist, dass sie mit einer Auflagefläche (88) in dem stationären Rahmen (9) und einer entsprechenden Auflagefläche (77) in dem beweglichen Endelement (5) zusammenwirkt, **dadurch gekennzeichnet, dass** die Sperranordnung
wenigstens ein Sperrelement (12) mit einer ersten keilartigen Fläche (22), wobei das wenigstens eine Sperrelement so angeordnet ist, dass es in eine Richtung, die zu der Öffnungs- und Schließbewegung der Filterpresse orthogonal verläuft, beweglich ist, wobei die erste keilartige Fläche (22) des wenigstens einen Sperrelements so angeordnet ist, dass sie mit einer entsprechenden gegenüberliegenden zweiten keilartigen Fläche (25) zusammenwirkt, und
wenigstens einen Sperraktuator (13), der so angeordnet ist, dass er das wenigstens eine Sperrelement so bewegt, dass die erste keilartige Fläche (22) mit der gegenüberliegenden zweiten keilartigen Fläche (25) zusammenwirkt, wodurch die Filterplatten gegeneinander gepresst werden,
aufweist, und
wobei die entsprechende gegenüberliegende zweite keilartige Fläche (25) jeweils in einer beliebigen aus den Auflageflächen (77, 88) des stationären Rahmens (9) oder des beweglichen Endelements (5) angeordnet ist, oder
wobei die Sperranordnung ferner wenigstens ein Belastungselement (15) aufweist, das die gegenüberliegende zweite keilartige Fläche (25) aufweist, wobei das wenigstens eine Belastungselement so angeordnet ist, dass es in eine Richtung, die zu der Öffnungs- und Schließrichtung der Filterpresse orthogonal verläuft, beweglich ist, und wobei wenigstens ein Belastungsaktuator (16) eingerichtet ist, um das wenigstens eine Belastungselement so zu bewegen, dass die gegenüberliegende zweite keilartige Fläche (25) des wenigstens einen Belastungselements mit der ersten keilartigen Fläche (22) des wenigstens einen Sperrelements (12) zusammenwirkt.

2. Filterpresse (1) nach Anspruch 1, wobei die Auflageflächen (77, 88) jeweils in Öffnungen (7, 8) des stationären Rahmens (9) und des beweglichen Endelements (5) angeordnet sind.

3. Filterpresse (1) nach einem der Ansprüche 1 bis 2, wobei das wenigstens eine Sperrelement (12) und der wenigstens eine Sperraktuator (13) in dem stationären Rahmen (9) der Filterpresse angeordnet sind.

4. Filterpresse (1) nach einem der Ansprüche 1 bis 2, wobei das wenigstens eine Sperrelement (12) und der wenigstens eine Sperraktuator (13) in dem beweglichen Endelement (5) angeordnet sind.

5. Filterpresse (1) nach einem der Ansprüche 1 bis 4, wobei die ersten keilartigen Flächen (22) und die zweiten keilartigen Flächen (25) strukturell eingreifende Flächen aufweisen, um eine relative seitliche Bewegung zwischen den ersten keilartigen Flächen (22) und den gegenüberliegenden zweiten keilartigen Flächen (25) zu verhindern.

6. Filterpresse (1) nach Anspruch 5, wobei die ersten keilartigen Flächen (22) und die gegenüberliegenden zweiten keilartigen Flächen (25) strukturell eingreifende Flächen in der Form von entsprechenden Nut- und Feder-Formen aufweisen.

7. Filterpresse (1) nach einem der Ansprüche 1 bis 6, wobei die ersten keilartigen Flächen (22) und die gegenüberliegenden zweiten keilartigen Flächen (25) reibungserhöhende Oberflächen aufweisen.

8. Filterpresse (1) nach einem der Ansprüche 5 bis 7, wobei die Sperranordnung (10) wenigstens ein Paar von Sperrelementen (12) und Belastungselementen (15) aufweist.

9. Filterpresse (1) nach einem der Ansprüche 5 bis 7, wobei die Sperranordnung wenigstens zwei Paare von Sperrelementen und Belastungselementen aufweist.

10. Filterpresse (1) nach einem der Ansprüche 5 bis 7, wobei die Sperranordnung wenigstens drei Paare von Sperrelementen und Belastungselementen aufweist.

## Revendications

1. Filtre-presse (1) comprenant un cadre fixe (9) dans lequel sont disposés un élément de tête (4), un élément de queue mobile (5), un actionneur (6) pour le mouvement d'ouverture et de fermeture du filtre-presse, et une pluralité de plaques filtrantes (2) disposées entre l'élément de tête et l'élément de queue mobile, le filtre-presse comprenant en outre un dispositif de verrouillage (10) pour verrouiller l'élément de queue (5) par rapport au cadre fixe (9) après le mouvement de fermeture de l'élément de queue mobile (5) et des plaques filtrantes (2) vers l'élément de tête (4) provoqué par ledit actionneur (6), le dispositif de verrouillage (10) étant conçu pour interagir avec une surface de support (88) dans le cadre fixe (9) et une surface de support correspondante (77) dans l'élément de queue mobile (5), **caractérisé en ce que** le dispositif de verrouillage comprend
au moins un élément de verrouillage (12) ayant une première surface cunéiforme (22), ledit au moins un élément de verrouillage étant conçu pour être mobile dans une direction perpendiculaire au mouvement d'ouverture et de fermeture du filtre-presse, la première surface cunéiforme (22) de l'élément de verrouillage étant conçue pour interagir avec une seconde surface cunéiforme opposée correspondante (25), et
au moins un actionneur de verrouillage (13) conçu pour déplacer l'élément de verrouillage de sorte que la première surface cunéiforme (22) interagisse avec la seconde surface cunéiforme opposée (25) pour ainsi presser les plaques filtrantes l'une contre l'autre, et
ladite seconde surface opposée correspondante cunéiforme (25) étant disposée dans l'une quelconque des surfaces de support (77, 88) du cadre fixe (9) ou de l'élément de queue mobile (5) respectivement, ou
le dispositif de verrouillage comprenant en outre au moins un élément de chargement (15) comprenant la seconde surface opposée cunéiforme (25), lequel au moins un élément de chargement étant conçu pour être mobile dans une direction perpendiculaire au mouvement d'ouverture et de fermeture du filtre-presse, et au moins un actionneur de chargement (16) étant conçu pour déplacer ledit au moins un élément de chargement de sorte que la seconde surface opposée cunéiforme (25) dudit au moins un élément de chargement interagisse avec la première surface cunéiforme (22) de l'au moins un élément de verrouillage (12).

2. Filtre-presse (1) selon la revendication 1, dans lequel les surfaces de support (77, 88) sont disposées dans des ouvertures (7, 8) du cadre fixe (9) et de l'élément de queue mobile (5) respectivement.

3. Filtre-presse (1) selon l'une quelconque des revendications 1 à 2, dans lequel l'au moins un élément de verrouillage (12) et l'au moins un actionneur de verrouillage (13) sont disposés dans le cadre fixe (9) du filtre-presse.

4. Filtre-presse (1) selon l'une quelconque des revendications 1 et 2, dans lequel l'au moins un élément de verrouillage (12) et l'au moins un actionneur de verrouillage (13) sont disposés dans l'élément de queue mobile (5).

5. Filtre-presse (1) selon l'une quelconque des revendications 1 à 4, dans lequel les premières surfaces cunéiformes (22) et les secondes surfaces cunéiformes opposées (25) ont des surfaces d'engagement structurelles pour empêcher un mouvement latéral relatif entre les premières surfaces cunéiformes (22) et les secondes surfaces cunéiformes opposées (25).

6. Filtre-presse (1) selon la revendication 5, dans lequel les premières surfaces cunéiformes (22) et les secondes surfaces cunéiformes opposées (25) ont des surfaces d'engagement structurelles sous la forme d'une languette et d'une rainure correspondantes.

7. Filtre-presse (1) selon l'une quelconque des revendications 1 à 6, dans lequel les premières surfaces cunéiformes (22) et les secondes surfaces cunéiformes opposées (25) ont des surfaces améliorant le frottement.

8. Filtre-presse (1) selon l'une quelconque des revendications 5 à 7, dans lequel le dispositif de verrouillage (10) comprend au moins une paire d'éléments de verrouillage (12) et d'éléments de chargement (15).

9. Filtre-presse (1) selon l'une quelconque des revendications 5 à 7, dans lequel le dispositif de verrouillage comprend au moins deux paires d'éléments de verrouillage et d'éléments de chargement.

10. Filtre-presse (1) selon l'une quelconque des revendications 5 à 7, dans lequel le dispositif de verrouillage comprend au moins trois paires d'éléments de verrouillage et d'éléments de chargement.
